Europäisches Patentamt

European Patent Office

Office européen des brevets

(19)

(11) Publication number: **0 014 580**
**B1**

# EUROPEAN PATENT SPECIFICATION

(12)

(45) Date of publication of patent specification: **02.03.83**

(51) Int. Cl.³: **G 01 N 23/223**

(21) Application number: **80300322.7**

(22) Date of filing: **04.02.80**

(54) Element analysis unit.

(30) Priority: **09.02.79 US 10716**

(43) Date of publication of application:
**20.08.80 Bulletin 80/17**

(45) Publication of the grant of the patent:
**02.03.83 Bulletin 83/9**

(84) Designated Contracting States:
**AT CH DE FR GB IT SE**

(56) References cited:
**FR - A - 2 184 328**
**GB - A - 1 259 220**

(73) Proprietor: **Martin Marietta Corporation**
**6801 Rockledge Drive**
**Bethesda Maryland 20034 (US)**

(72) Inventor: **Clark III, Benton Clyde**
**10890 Park Range Road**
**Littleton Colorado 80123 (US)**

(74) Representative: **Cotter, Ivan John et al,**
**D. YOUNG & CO. 10 Staple Inn**
**London WC1V 7RD (GB)**

Courier Press, Leamington Spa, England

Element analysis unit

The present invention relates to element analysis units, and more particularly (but not exclusively) to a field portable X-ray fluorescent spectrometer.

X-ray fluorescent spectrometers have long been used to analyze the elemental composition of mineral samples taken during geological surveys. In operation, the unknown mineral samples are irradiated in order to cause them to fluoresce, and the resulting fluorescent X-ray radiation is analyzed with a multichannel radiation analyzer. The multichannel analyzer accumulates a spectrum representing the energy distribution of the fluorescent radiation. The profile of the energy spectrum thus obtained will be determined by the elemental composition of the sample. Thus, the elemental composition of the sample can then be determined by comparing the spectrum with other spectrums obtained from samples of known composition.

Due to the not inconsiderable size of these X-ray fluorescent spectrometers, the practice has heretofore been to install the X-ray fluorescent spectrometer at a fixed location, often quite distant from the area being surveyed. Specimens collected in the field thus had to be transported to the spectrometer for analysis. Furthermore, the specimens often had to be processed (as by pulverising them) before analysis could begin. The pin-pointing of a particular mineral concentration was thus a lengthy process, since it might be necessary to make multiple trips to the survey site in order to obtain samples from slightly different areas than those from which the initial samples had been collected. To reduce survey time, then, it was important that the surveyor collecting the samples draw upon his own experience to provide a visual, first order analysis of the mineral content of the samples being collected. Experience of the surveyor was therefore a factor of considerable importance.

Several miniature element analysis units utilising the property of X-ray fluorescence were developed for use in space exploration, and are now being used in the two Viking landers presently operating on the surface of the planet Mars. Unfortunately, these X-ray fluorescent spectrometers were designed solely to acquire and transmit raw spectrographic data, which was to be processed in a large scale, Earth-based data processing computer. It could not be used to provide an analysis of mineral samples in a field portable system to be operated and read by a person rather than a machine.

US Patent No. 3 925 660 discloses an X-ray spectrometer including radiation means for irradiating a sample with X-rays of any selected one of a plurality of specific different wavelength spectra, detector means for detecting radiation from the sample and providing signals representative of the returned radiation, and processing means including a minicomputer for processing said signals.

UK Patent Specification No. 1 259 220 discloses an analyser that includes a sensor means in the form of an instrument that can be lowered down a borehole. The sensor means includes a radiation means for irradiating a material to be analyzed, and detector means for detecting radiation returned by the irradiated material and providing signals representative of the returned radiation. Processing means at the surface of the borehole is interconnected with the sensor means for processing said signals.

An object of the present invention is to provide an element analysis unit in which different types of radiation means and detector means can readily be used.

According to the present invention there is provided an element analysis unit comprising:

sensor means including radiation means for irradiating a material to be analyzed, and detector means for detecting radiation returned by the irradiated material and providing signals representative of said returned radiation; and

processing means interconnected with said sensor means for processing said representative signals;

characterized in that indicating means is provided in said sensor means for providing an indication of the type of said radiation means and said detector means, and in that said processing means is responsive to said indication in such a way that said processing means will be automatically adapted for operation with the associated type of radiation means and detector means when the sensor means and processing means have been interconnected.

A preferred embodiment of the present invention provides a field-portable element analysis material identification unit (in particular an X-ray fluorescent spectrometer) which may be operated and read by a person to provide semi-quantitative and qualitative information regarding the composition of unprocessed material samples. This element analysis unit not only permits semi-quantitative analysis of the sample being examined, but also permits the comparison of the spectrum of a given sample with a large number of reference samples, as well as storage of the spectrum for later analysis. In addition, the unit includes plural, interchangeable sensor heads, each having different radiation sources therein, so as to permit analysis of a wide range of elements.

The field portable X-ray fluorescent spectrometer constituting the preferred embodiment of the invention includes a multichannel analyzer and a plurality of interchangeable sensor heads. Each sensor head includes a shutter which, when open, permits one of several radiation sources to irradiate a material to be analyzed. the returned radiation is detected by a corresponding detector which provides corresponding data in response. This shutter has calibration plaques attached to it so that, when closed, the plaques are exposed to the radiation sources and return radiation having selected energy distributions to the detectors. The multichannel analyzer uses the resulting detector data to calibrate the sensor head. Each sensor head includes circuitry for identifying itself to the multichannel analyzer. The analyzer automatically adapts its operation in accordance with this identification. When the shutter is open, the multichannel analyzer utilizes the detector data to accumulate an energy spectrum of the material being analyzed, and displays the spectrum on a dislay screen. A cursor control allows the operator to move a cursor along the dislayed spectrum. A display is automatically provided with a display of the symbol of the element, if any, having its major spectral peak at the position identified by the cursor. Secondary indications identify other positions along the spectrum at which peaks would appear if the element were present. A memory is provided for storing a number of reference spectra, any one of which may be displayed on the screen along with the acquired spectrum for comparison purposes. The memory also stores previously acquired spectra for later analysis. The analyzer also includes other operational features, such as normalization, window control, and ratio and concentration determination, to permit the operator to quantitatively analyze materials in the field.

The preferred element analysis unit has a number of interchangeable sensor heads, each employing one or more different radiation sources and associated detectors, so that the unit has the flexibility to perform analyses of a wide range of mineral compositions. It can provide a visual display of the energy spectrum of fluorescent X-rays emitted by an irradiated sample, and with a cursor movable along the spectrum, provide an indication to the operator of the element which has its major peak at that position on the spectrum at which the cursor is located. The unit can also provide one or more other indicators positioned at locations along the spectrum corresponding to the positions of peaks of reference spectra so as to permit ready comparison between the positions indicated by those indicators and the peaks of the sample spectrum being analyzed. Also, features to free the unit from the drift and gain errors may be readily incorporated.

The invention will become more readily apparent from the following detailed description, given by way of illustrative and non-limiting example, of a preferred embodiment, illustrated in the accompanying drawings, wherein:

Figure 1 is an illustration of an element analysis unit in accordance with the present invention;

Figure 2 is a plan view of a control panel of a multichannel analyzer utilized in the element analysis unit of Figure 1;

Figure 3 is a perspective illustration of a sensor head of the element analysis unit in Figure 1;

Figure 4 is a more detailed illustration of a sensor head of Figure 3, showing the arrangement of the shutters therein:

Figure 5 is a partly schematic perspective illustration of another embodiment of a sensor head for use in conjunction with the element analysis unit of Figure 1;

Figure 6 is a broad block diagram of control circuitry of the element analysis unit;

Figure 7A is a more detailed illustration of a sensor head block shown in Figure 6 and associated with the sensor head of Figure 3;

Figure 7B is a more detailed illustration of a calibration control block shown in Figure 6;

Figure 8 is a block diagram illustrating the manner of connection of the sensor head block of Figure 7A to the calibration control block of Figure 7B;

Figure 9 is a circuit schematic of an analyzer control block of the block diagram of Figure 6;

Figure 10 is a more detailed illustration of display circuitry of the block diagram of Figure 6; and

Figure 11 is a representation of the manner in which information is stored in a display memory.

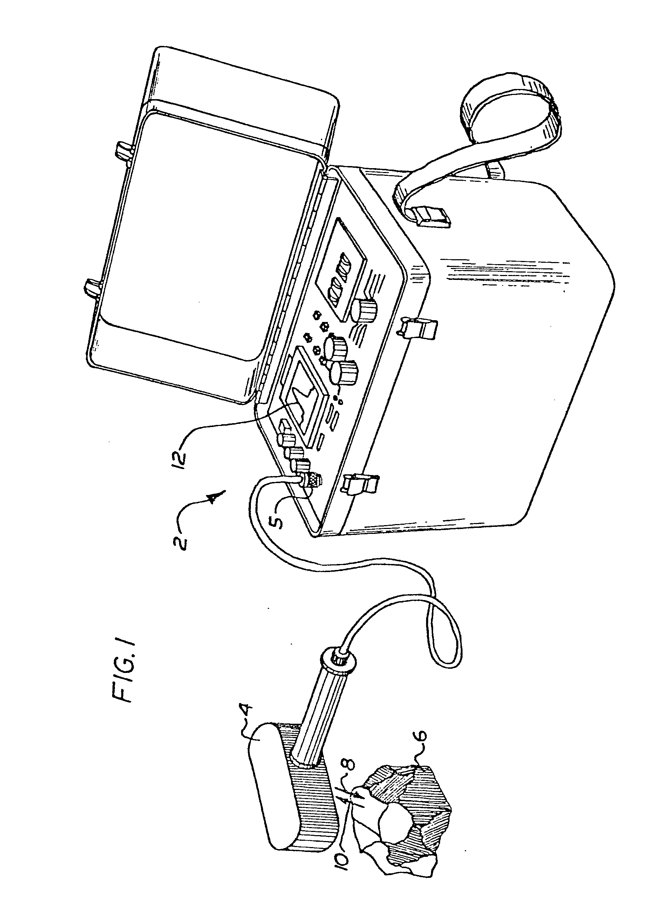

Referring first to Figure 1, the element analysis unit broadly consists of two components; a multichannel analyzer 2 and a hand-held sensor 4. The two units are coupled together by a conventional multiconductor connector 5. This connector permits easy disconnection of the sensor head 4 from the analyzer 2, and the substitution of a different sensor head having different detectors and radioactive sources. The unit is entirely self contained, and includes an internal battery in order to provide the power necessary for all normal operations. The unit is mounted in a suitable carrying case and thus may be readily carried about in the field without undue discomfort to the operator.

In order to analyze a mineral sample 6, the sensor head will be appropriately positioned over the sample 6, and a shutter on the sensor head will be opened so as to expose the sample to a beam of radiation 8 generated by a radioactive source located within the sensor head. A detector, also located within sensor head 4, will detect the fluorescent radiation 10 emitted by the sample. For each detected particle of fluorescent radiation, the sensor head 4 provides a corresponding digital signal to the multichannel analyzer 2. Each of these digital signals will have a binary value indicating the energy of the corresponding detected X-ray.

The multichannel analyzer 2 sorts these digital words according to binary values, and provides a display graphically indicating the number of pulses which have been processed for each energy value. The multichannel analyzer 2 may be simply characterized as including one counter for each possible binary value of the digital signals supplied by the sensor head. Each time a digital signal is provided to the multichannel analyzer, the number within the counter identified by the binary value of that signal will be incremented. As these counts are being accumulated, the contents of all of the counters will be sequentially displayed at consecutive horizontal positions across a display screen 12 to produce an energy spectrum thereon. The vertical height of this spectrum at any given horizontal position along the display screen will indicate the number of counts accumulated in the counter corresponding to that horizontal position, and thus to that particular energy channel.

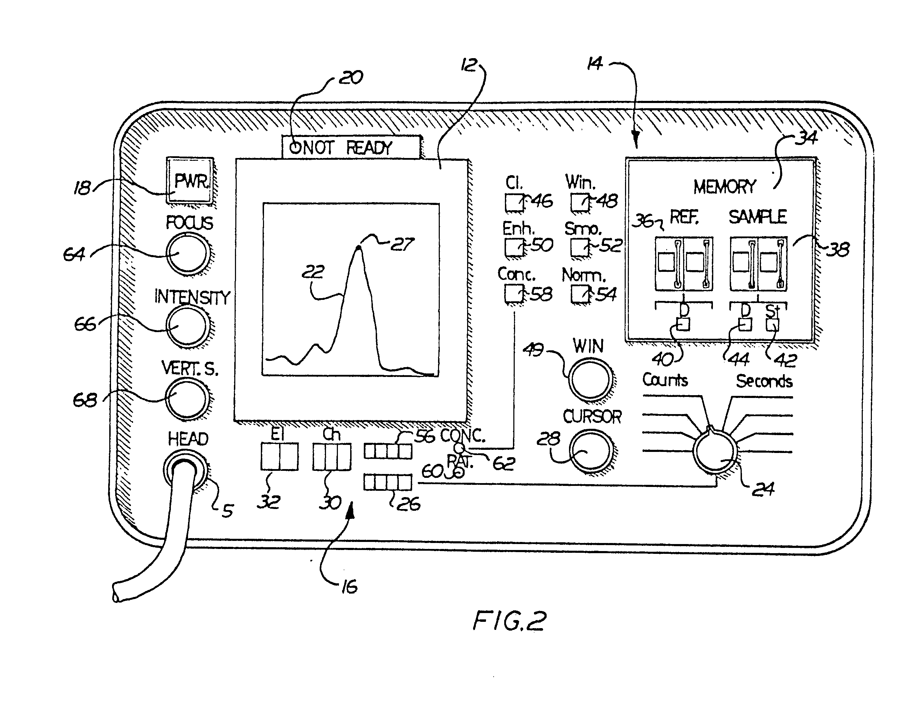

The control panel of multichannel analyzer 2, shown more clearly in Figure 2, broadly includes a display screen 12, as well as a number of control switches 14 and alphanumeric displays 16. Displays 16 will preferably be of the liquid-crystal variety (LCD's) to minimize power consumption thereby. A power switch 18 controls the application of power to the control circuitry located within the multichannel analyzer 2, and to the various displays associated therewith. Upon the initial application of power to the unit the control circuitry will initialize the operation of the element analysis unit in preparation for the acquisition of data. During this warm up period, a NOT READY light 20 located immediately above the display screen 12 will be illuminated. Upon conclusion of the warm up and initialization cycles, the NOT READY light 20 will switch off, indicating that the unit is prepared for normal operation. The operator may then actuate the shutter on the sensor head, automatically resetting the display memory and initiating the accumulation of data by the multichannel analyzer. During the accumulation of data, the display screen 12 will be periodically updated so that the spectrum 22 provides a continuous indication of the spectrum being accumulated by the sensor head.

A multi-position rotary switch 24 is included to control the interval of time during which data is accumulated. This switch 24 may be switched to one of eight different positions. When in one of the four rightward positions (as viewed in Figure 2), the multichannel analyzer will accumulate data for a fixed interval of time, set by the one of the four switch positions at which the switch 24 is located. When in one of the four leftward switch positions, however, the analyzer will accumulate counts for an arbitrary interval of time, until a specified number of counts has been accumulated therein. Again, the number of counts required to conclude the acquisition of a particular sample spectrum is determined by the one of the four switch locations at which the switch 24 is located. A four digit readout 26 is included to provide a numerical display of the number of seconds or counts which have transpired in a given sample spectrum acquisition run. Of course, the operator may also conclude the taking of data samples simply by releasing the shutter on the sensing head, thereby automatically disabling the taking of further data.

As stated previously, the profile of the sample spectrum thus obtained will be determined by the elemental composition of the mineral sample. More specifically, the position (i.e. energy channel) of the various peaks in the spectrum indicates the composition of the mineral sample, since each element fluoresces at discrete energies characteristic to that element. The height of each peak, on the other hand, is determined by the number of particles detected in that energy channel. This, in turn, is proportional to the quantity present of the element producing that peak. The spectrum therefore provides both qualitative and quantitative information as to the content of the mineral sample being analyzed.

The multichannel analyzer 2 generates a cursor 27 movable along the spectrum 22 in order to identify a particular channel therealong. This cursor is generated by brightening the portion of the spectrum 22 associated with the energy channel at which the cursor is located. This cursor may be moved from channel to channel by means of a cursor control knob 28. The number of the channel upon which the cursor is located will be readout upon a numerical display 30. Another display 32 provides an alphanumeric readout of the symbol of the element having its major peak on the channel upon which the cursor is located. If no element has a peak at that channel, then the element display 32 will be blank.

One or more additional channels may also be highlighted. This additional highlighting will hereinafter be referred to as "secondary" indicators. These secondary indicators identify the energy channels where other peaks exist in the spectrum of the element whose major peak is identified by the location of the cursor. These peaks may be K, L, or M peaks, escape peaks, etc. Thus, if an element had its major peak in the energy range covered by the display, and also had one or more other peaks in that range, all of these peak channels would be highlighted whenever the cursor was positioned at the channel at the major K peak. To permit the operator to readily differentiate between the highlighting indicating the cursor and that representing a "secondary indication" the cursor will blink on and off whenever positioned at a channel corresponding with some elements major peak.

In order to facilitate the analysis of a mineral sample spectrum, the element analysis unit also provides for the display of multiple spectrums upon the display screen 12 at one time. These additional spectrums will be recalled from a solid state memory associated with the element analysis unit, and may be either temporarily or "permanently" stored within the unit.

Thus, this solid state memory includes a read-only memory (ROM) section providing "permanent" storage of a number of reference spectrums of known minerals and also includes a random-access memory (RAM) section for temporary storage of a plurality of spectrums previously acquired from other mineral specimens.

The storage and display of spectrums is controlled by memory controls 34. These memory controls include two sets of thumb wheel switches 36 and 38, each of which may be set to identify any one of up to one hundred different spectrums stored in memory. The thumb wheel switches 36 provide access to the reference spectrums stored within the memory of the element analysis unit. The display of any one of these reference spectrums may be accomplished by setting the thumb wheel switches 36 to the appropriately numbered memory location, and then depressing a DISPLAY switch 40 associated therewith. The element analysis unit will respond to this by displaying the appropriate reference spectrum upon the display screen 12 along with the spectrum 22 acquired from the mineral specimen presently being examined. This spectrum may be deleted from the display by again depressing switch 40.

Similarly, the thumb wheel switches 38 may be set to identify any one of up to one hundred different temporary storage locations within the memory of the element analysis unit. When a STORE button 42 is depressed, the sample spectrum 22 presently being displayed upon the screen 12 will be stored in the memory location identified by the position of thumb wheel switches 38. Any sample spectrum which has been stored in this fashion may be recalled from the temporary memory by appropriate setting of thumb wheel switches 38 and depressing a DISPLAY button 44, also associated with the thumb wheel switches 38. Again, this sample spectrum may be removed from the display be depressing switch 44 once more.

The screen 12 may therefore display as many as three different spectrums at one time: the spectrum of a sample presently being analyzed, a reference spectrum stored in memory within the element analysis unit, and a spectrum of a previously acquired sample spectrum, also stored in memory.

The spectrum 22 of the sample being analyzed will be erased from the screen 12 every time the shutter of the sensor head is opened. The other traces, however, will remain upon the screen until the respective display button is depressed once more, or a CLEAR switch 46 is pressed. This CLEAR switch operates to erase the other traces from the screen, but does not affect the display of the spectrum 22 of the sample being analyzed.

Various other switches 48, 50, 52 and 54 are provided for controlling various other characteristics of the display provided on display screen 12. A WINDOW switch 48, when pressed, will cause the multichannel analyzer to blank the display of all of spectrum 22 except that portion which is within a selected number of channels of the position of the cursor. This will have the effect of minimizing extraneous confusion during those operations in which only a single peak is of substantial interest in the entire spectrum 22. The WINDOW feature may also be cancelled by again depressing the WINDOW switch 48. A window potentiometer 49 sets the width of the display window, permitting operator control thereof.

The peaks of the spectrum 22 may be enhanced by depressing an ENHANCEMENT switch 50. When this button is depressed, an anti-log amplifier is switched into the Y channel of the display screen 12 (which is a cathode ray tube (CRT) in the described embodiment), causing the peaks of the spectrum 22 to be emphasized.

A smoothing function, controlled by switch 52, is provided for use in conjunction with the enhancement function, since otherwise rather bizarre and meaningless exaggeration of statistical outliers will result. This smoothing function alters the manner in which data is acquired by the multichannel analyzer, so as to eliminate, to the extent possible, the statistical nature of the spectrum.

A normalization function, controlled by a normalization switch 54, is also provided for use in conjunction with the enhancement and smoothing functions. This normalization function automatically normalizes the display by dividing the count for each channel by a number proportional to the number of counts in the backscatter peak.

The unit includes provisions for accomplishing semiquantitative analysis of samples by examining peak heights. The peak heights are not sufficient by themselves, however, to determine the quantitative constituents of the mineral specimen. This is because the height of any given peak within the spectrum will depend upon, among other factors, the strength of the radiation source, the distance from the source to the sample (and the sample to the detector), the density of the sample and its X-ray absorption characteristics, the particle size granularity, and surface roughness of the sample.

The effect of these factors can be greatly reduced or eliminated by evaluating the fluorescent peaks of the spectrum relative to the intensity of backscatter radiation intensity. For example, if the sensor head is not placed directly on the sample, a lower rate of counting of fluorescent rays will occur than if the device were closer. The backscatter intensity (resulting both from compton radiation and coherently scattered radiation) from the sample will, however, also be less by the same scale factor. The element analysis unit utilises this effect to provide a semiquantitative measure of the abundance of selected elements. Since the uncertainties due to the factors given above are greatly reduced by measuring the intensities relative to the backscatter peak, the need to process and prepare the sample prior to analysis in essentially eliminated.

A numerical readout 56 is included to provide a visual indication to the operator of the results of this analysis. The multichannel analyzer will indicate in this numerical read out either the ratio of a given peak relative to the backscatter peak, or the concentration of the given element. Which of these functions is being performed will depend upon the position of a CONCENTRATION switch 58. When this switch is in one position, the ratio light 60 will be illuminated and the read out 56 will provide a read out of the number of counts in the channel upon which the cursor is presently positioned, divided by the number of counts in a reference, backscatter channel. When the concentration switch 58 is in its second position, however, the ratio light 60 will be darkened, and a concentration light 62 will instead be illuminated. The numerical read out 56 will then provide a direct read out of the concentration of the given element within the mineral composition.

The manner in which the CONCENTRATION function is accomplished will be described more fully hereinafter, however broadly it may be described as follows. The analyzer control circuitry has a number of look-up tables stored therein, each of which plots fluorescent backscatter ratio on one axis versus the concentration of a selected element on the other axis. These look-up tables are indexed according to both mineral composition, and element peak. The operator will select an appropriate look-up table by setting the thumb wheel switch 36 at the value addressing the reference spectrum most nearly approximating the sample spectrum 22, and positioning the cursor at the peak of the element of interest. The analyzer examines the position of the reference thumb wheel switch 36 and the position of the cursor, and refers to the appropriate look-up table upon this basis. The ratio value determined for that particular cursor location is then used to address the selected look-up table and thus provide a read out of the concentration of the element within the sample under study.

In addition to the controls described above, the multichannel analyzer also incorporates two potentiometers 64 and 66 for respectively controlling the focus and intensity of the spectrums displayed on the display screen 12. A third potentiometer 68 permits operator modification of the vertical scale of the spectrum 22. Thus, by suitable adjustment of the vertical scale knob 68, the vertical scale of the spectrum 22 may be expanded or reduced.

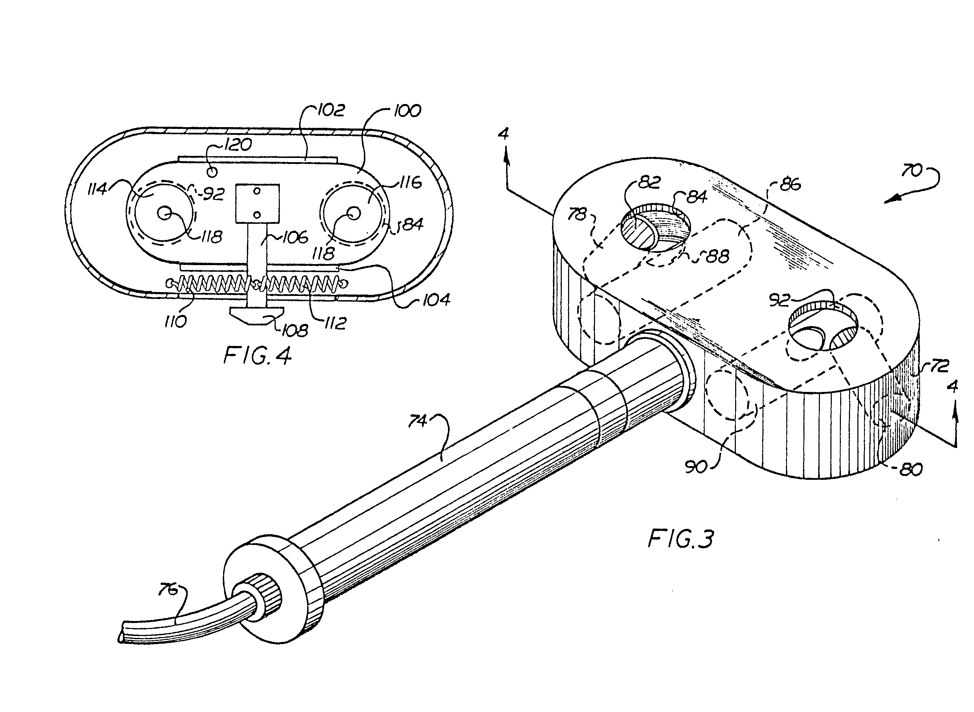

Figure 3 illustrates one embodiment of the sensor head for use in conjunction with the multichannel analyzer shown in Figure 2. This sensor head 70 includes a head assembly 72 and a handle assembly 74, and is connected to the multichannel analyzer through a suitable length of multi-conductor cable 76.

In this embodiment, the head assembly 72 has two sources of nucleonic radiation 78 and 80 mounted therein. Nucleonic source 78 is enclosed within a radiation shielded casing having an opening 82 therein. The nucleonic source 78 is oriented within the head assembly 72 so that the loosely collimated beam of nucleonic radiation emitted through the opening 82 in the casing of source 78 will pass through a suitable opening 84 in the housing of the head assembly 72. This opening 84 will normally be blocked by a shutter, not shown in this figure.

A detector 86 is provided adjacent the opening 84 to provide detection of the nucleonic particles fluoresced by the mineral specimen against which the sensor head assembly 72 is placed. In the illustrated embodiment, this detector 86 is a gas-filled proportional counter (PC) detector. Other types of detectors (such as solid state mercuric iodide detectors could, of course, be used instead if desired. This PC detector 86 has a foil window 88 therein through which the nucleonic particles are to pass. The detector 86 will be oriented so that the opening 88 is also adjacent the opening 84 in the head assembly 72, but is not within the direct line of radiation emitted from the source 78.

PC detector 86 consists essentially of a chamber filled with a specific gas. Two electrodes are placed within this chamber, and a high voltage is applied between them so that a high potential electrostatic field exists within the chamber. When a nucleonic particle passes through the chamber, the gas therein will be ionized so that a trickle of current will temporarily flow between the two electrodes. This causes a momentary change in the current flow through the electrodes, which is sensed by a charge sensitive circuit to be described in detail hereinafter.

The second source 80 also has a PC detector 90 associated therewith. As before, the windows in the source 80 and the PC detector 90 are both pointed towards an opening 92 in the housing of the head assembly 72.

Again, a shutter will normally cover the opening 92. Sources 78 and 80 will be provided with different sources of nucleonic radiation, so that the operator may select one or the other source simply by operating the shutter to expose one of the two openings 84, 92 associated with the sensor head 72. Source 78 may, for example, be a Fe-55 radiation source, whereas source 80 may be a Cd-109 radiation source. Another of the interchangeable sensor heads could instead use Am-241 and Co-57 radiation sources. These sources are selected so that energy of the X-rays used to irradiate the sample are only slightly above to several times the energies of the K, L and M lines of interest. It will be noted that the orientation of the two sources 78 and 80 is such that the beams of radiation emitted therefrom point generally away from the nearer edge of the head assembly 72. This is done for reasons of operator safety; most of the backscattered radiation will now impinge on the head assembly 72, rather than passing beyond the boundaries thereof and thus possibly posing a radiation hazard to the operator.

Figure 4 is a section taken generally along lines 4—4 of Figure 3, and illustrates the shutter arrangement for selectably covering or uncovering the openings 84 and 92 associated with the head assembly 72 of Figure 3. A single shutter effects the blocking and unblocking of both openings. This shutter is comprised of a single, essentially rectangular tungsten coated plate 100 which rides along longitudinal notches in two rails 102 and 104 on either side of the openings 84 and 92. The shutter 100 may therefore be moved leftward or rightward (as viewed in Figure 4) along these rails. A lever arm 106 is rigidly affixed to the shutter 100, and extends through a slot in the housing of sensor head 72. A button 108 is attached to the exterior portion of the lever arm 106. The operator may uncover the opening 84 by moving the button 108 to the leftward, as viewed in Figure 4, and may uncover the opening 92 by instead moving the button 108 in a rightward direction, as viewed in Figure 4. Two springs 110 and 112 are attached between the lever arm 106 and the housing of the sensor assembly 72 so as to spring bias the shutter 100 in a central position, wherein both of openings 84 and 92 are covered by the shutter 100.

When in this central position, two calibration plaques 114 and 116, attached to the shutter plate 100, will be located essentially concentrically over the openings 84 and 95. These calibration plaques are circular discs of quartz glass, with iron dots 118 bonded to the center thereof. These calibration plaques are provided to permit rapid and accurate calibration of the gain and offset of the multichannel analyzer, through the operation of circuitry which will be described hereinafter. Essentially, these calibration plaques provide a known spectrum which should have peaks in predetermined positions along the spectrum 22 displayed on display surface 12. When the shutters are in the fully closed position illustrated in Figure 4, these calibration plaques will be exposed to the X-rays provided by the X-ray sources, and should therefore provide spectrums having the predetermined form. The calibration spectra will each include at least two peaks, with one preferably at the upper end of the displayed energy range and the other at the lower end of the displayed energy range. In the embodiment being described, one of these peaks is represented by the backscattered radiation, with the other being a peak in the spectrum of the calibration plaque material. If the peaks provided by the calibration spectrum do not occur in the expected places, the gain and offset of the instrument will be adjusted accordingly. Although this calibration procedure is performed automatically in the described embodiment, manual adjustment of the gain and offset could as easily be used. These calibration plaques therefore provide a convenient and easy measure of the calibration of the instrument.

Three microswitches, not shown in Figure 4, are associated with the shutter plate 100 and are provided in order to sense its actual position. Two microswitches are provided at the extreme right and leftward extent of travel of the shutter plate 100, and provide signals indicative of whether one of the openings 84 or 82 is exposed. The third switch is provided adjacent the position which a hole 120 in the shutter plate 100 will occupy when the shutter plate is in its central position. This switch senses the presence or absence of the hole 120 at this location, and thus the output thereof will indicate whether or not the shutter plate 100 is in its central position (i.e. whether both of openings 84 and 92 are covered).

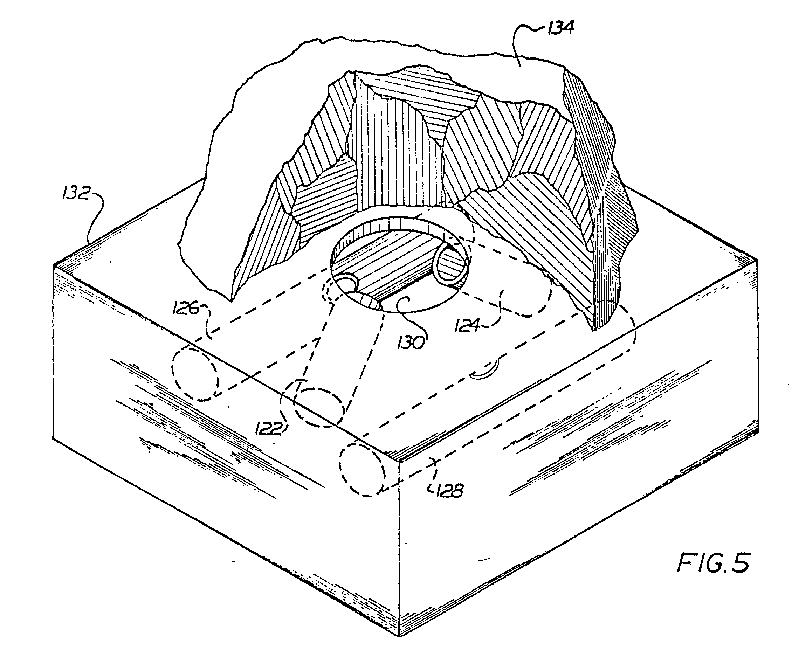

Figure 5 illustrates another embodiment of the sensor head assembly 10. In this embodiment, two sources 122 and 124 are again provided, each again accompanied by a corresponding PC detector 126, and 128. Unlike the previous embodiment, however, only a single opening 130 is provided in the exterior of the housing 132 of the sensor head assembly. Both of the sources 122 and 124 are oriented with respect to the opening so that the loosely collimated beams of X-rays which are provided thereby are directed outward through the opening 130. Similarly, the windows in the PC detectors 126 and 128 are oriented facing the opening 130 so as to receive the fluorescent radiation emitted by the sample 134 positioned adjacent the opening 130. Again, a shutter assembly will be provided, in this case having only a single calibration plaque associated therewith.

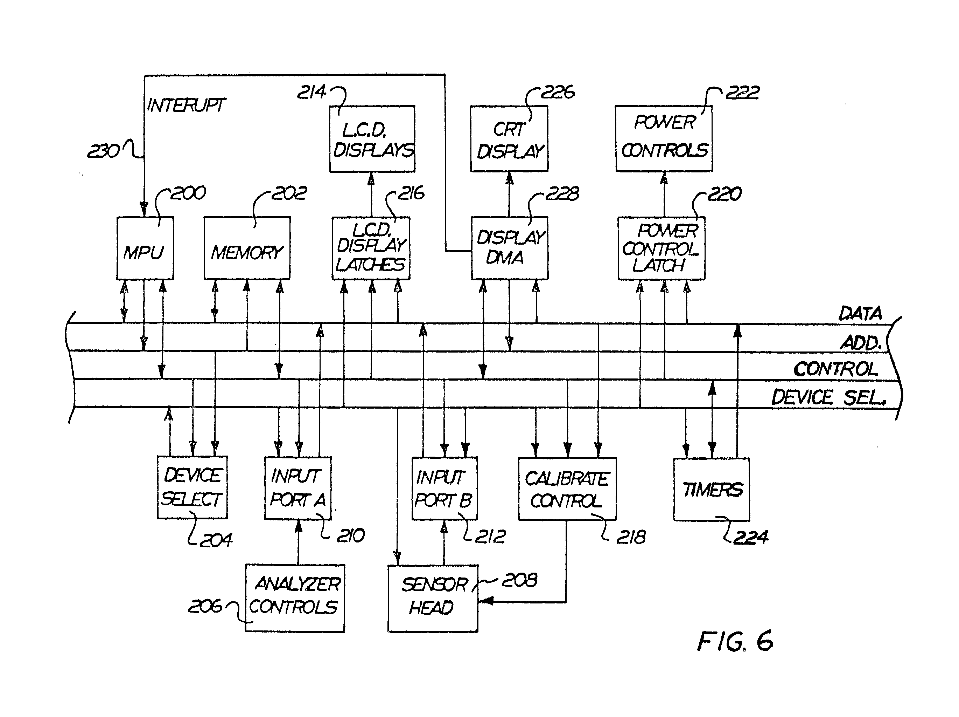

Figure 6 broadly illustrates the electronics associated with the multichannel analyzer and sensor head assembly of the X-ray fluorescent spectrometer. In this Figure it will be seen that a microprocessor 200 is provided to control the various operations of the X-ray fluorescent spectrometer. The various inputs and outputs of the system are connected to the microprocessor 200 by means of various buses. These buses include an eight bit wide data bus, a sixteen bit wide address bus, and a control bus. The instructions for operation of the microprocessor 200 are contained within a solid state memory 202, which will be comprised of several sections. One section of this memory will be comprised of read-only memory (ROM), and will contain the various control programs, and the permanent reference spectrums and look-up tables associated with the operation of the microprocessor 200. In addition, a section of random-access memory (RAM) will also be provided for storing spectrums of samples which have been analyzed previously, for providing storage of the various variable associated with the operation of the microprocessor 200, and for various other "scratch pad" purposes. This RAM will be continuously powered, independently of the power switch 18, so as to retain the stored data even when power is not being supplied to the remainder of the circuit.

The inputs and outputs of the system will be selected under control of device select commands provided by a device select decoder 204. This device select decoder 204 decodes the addresses provided by the microprocessor 200 to provide enabling signals to the input or output port or device which has been designated by the address on the address bus at that time. Thus, the device select decoder 204 provides plural output lines, each one of which will be directed to a corresponding input or output port or device. Figure 6, and hereinafter, these lines will be referred to as device select lines.

The inputs to the system are derived from two sources; the analyzer controls 206 which were described with respect to Figure 2, and the sensor head 208 which was decribed with respect to Figures 4, 5 and 6. The analyzer controls are interfaced with the data bus by means of an input port 210, whereas the sensor head 208 is interfaced with the data bus by means of an input port 212.

The outputs from the system include the CRT display 226 and the LCD displays 214 provided on the face of the multichannel analyzer, a calibrate control circuit 218, and a power control latch 220. The signals which are used to control the state of the LCD displays 214 are derived from display latches 216, associated therewith. The calibrate control circuit 218 includes programmable offset and gain control circuits, and is used to provide automatic calibration of the sensor head 208. The power control latch 220, on the other hand, is used to control the application of power to various high power dissipation elements within the circuit, and is controlled by the microprocessor 200 to disable the application of power to these elements in order to conserve power in various circumstances which will be described hereinafter.

A programmable interval timer 224 serves as another peripheral for the microprocessor 200, and includes a number of timers which are individually programmable by the microprocessor 200 to provide indications to the microprocessor when specific intervals have elapsed.

In addition to the foregoing, a cathode ray tube (CRT) display 226 is provided. Other display devices such as arrays of LED's or LCD's, for example, could of course be used in place of CRT 226, if desired. The CRT used in the described embodiment is controlled by a display DMA circuit 228 which will be described hereinafter. The display DMA controls the supply of the vertical and horizontal control signals, as well as the intensity signals to the CRT display 226, and operates somewhat independently of the microprocessor 200. During each individual scan of the CRT by the CRT display 226, the display DMA 228 operates to retrieve the necessary information from memory 202 without substantial disruption of the operation of the microprocessor 200. Upon the conclusion of each display scan, however, the display DMA 228 provides an interrupt signal along an interrupt line 230 to the microprocessor 200. This interrupt causes the microprocessor 200 to interrupt its programmed operation, and to shift instead to an interrupt procedure which is designed to service the display DMA and prepare it for the next succeeding scan. After this has been completed, the microprocessor 200 will return to the point in its regular programming at which it was interrupted.

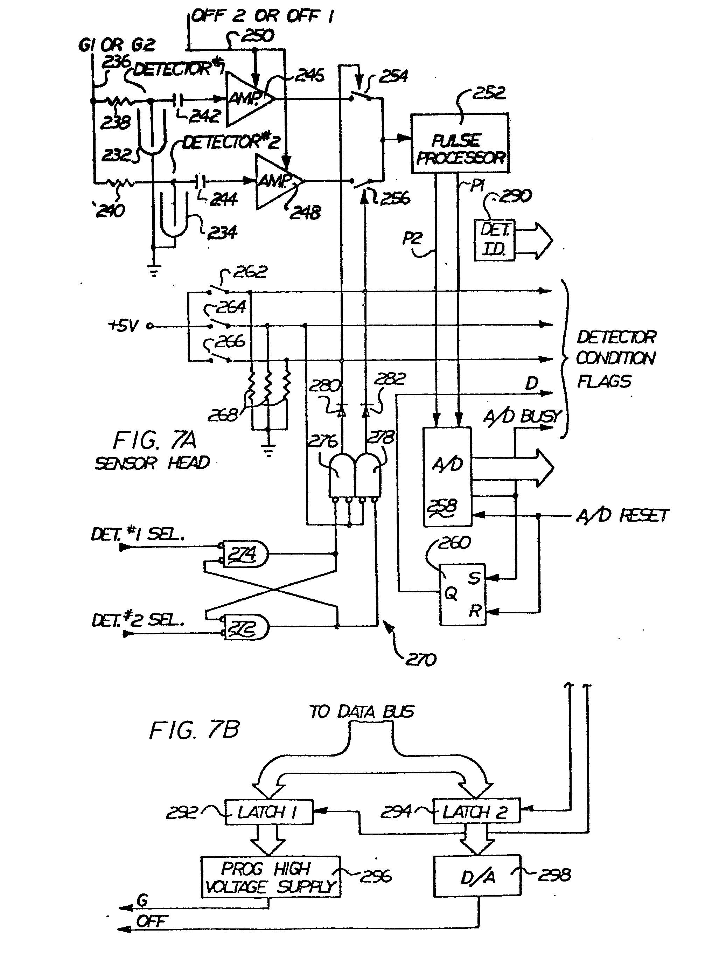

Figure 7A provides a more detailed illustration of the sensor head block 208 of Figure 6. As shown in this figure, PC detectors 232 and 234 (corresponding to PC detectors 86, 90 of Figure 3) each have one electrode connected to a high voltage line 236 through a respective isolation resistor 238 and 240, with the other electrode of each being connected to ground. The high voltage line 236 provide the necessary high voltage DC bias to each of the detectors 232 and 234 from the calibration control circuit 218 of Figure 6. As stated previously, the X-ray fluorescent radiation emitted by the sample will produce brief deviations in the current across the detectors 232 and 234. In order to detect these current pulses, the outputs of the detectors are capacitor coupled via capacitors 242 and 244 to respective charge senstive amplifiers 246 and 248. The capacitors 242 and 244 isolate the high potentials being applied to the electrodes of the PC detectors 232 and 234 from the amplifiers 246 and 248 while permitting the current pulses to be detected thereby. These amplifiers 246 and 248 are each further connected to a DC offset line 250 which is also derived from the calibration control circuit 218. The amplifiers essentially add the DC offset voltage on line 250 to the current pulses provided by the detectors.

A single pulse processor 252 is provided for processing the pulses appearing at the output of a selected one of amplifier 246 or 248. Two analog switches 254 and 256 (which will preferably be solid state FET switches) selectively connect either the output of amplifier 246 or the output of amplifier 248 to the input of pulse processor 252. Only one of analog switches 254 and 256 will be closed at any one time. The output of the pulse processor 252 will therefore reflect either the pulses provided by detector 232 or the pulses provided by detector 234.

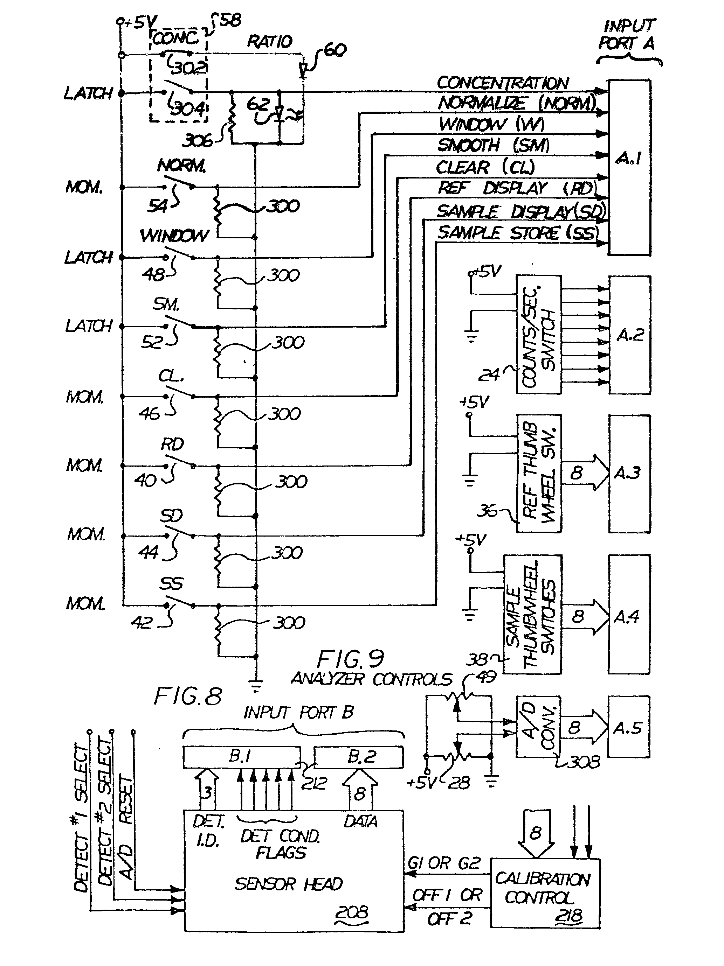

Pulse processor 252 includes a peak detector circuit (not shown separately) which detects the peak amplitude of each pulse provided at the input to the pulse processor, and provides an analog signal on output P1 which has an amplitude proportional to this peak amplitude. Another circuit in the pulse processor provides a logic signal on output P2 which is normally at a low logic level, but switches high when peak amplitude information is available on output P1. The P2 output of pulse processor 252 is used to signal an analog-to-digital (A/D) converter 258 to begin conversion of the analog signal then on output P1 to a corresponding digital word. During that interval in which A/D converter 258 is busy with the conversion of a given analog signal to a corresponding digital word, and A/D BUSY line is raised to a high logic level. This high logic level sets an S/R flip-flop 260 to a high logic level, thus causing the output D thereof to also be raised to a high logic level. Although the A/D BUSY line will be returned to a low logic level upon the completion of conversion, the D line will remain at a high logic level until the flip-flop 26 is reset by a signal supplied by the microprocessor 200. The data word provided at the output of A/D converter 258, as well as the A/D BUSY line and the outpout D of flip-flop 260, are all provided to input port B in a manner which will be described with respect to Figure 8.

Also shown in Figure 7A are the three microswitches 262, 264 and 266 associated with the shutter plate, and which indicate its position. Each of these microswitches is connected between a +5 voltage source on the one hand, and a corresponding pull-down resistor 268 on the other hand. The purpose of the pull-down resistors is to pull the voltage at the output of the respective switch down to a ground level when that switch is in an open state. The junction between the switches 262, 264 and 266 and the pull down resistors is provided to the microprocessor data bus via the input port B so as to indicate to the microprocessor the position of the shutter.

Switch 266 is associated with the position of the shutter plate wherein the opening 84 (Figure 3) is exposed and the output of detector 86 is to be processed. It will be noted that the output of switch 266 is directly utilized to control the position of analog switch 254, so that the output of amplifier 246 will be connected to pulse processor 254 whenever switch 266 is depressed (indicating that detector 232 is to be active). Switch 266 is similarly utilized to directly control the position of analog switch 256, and will automatically connect detector 234 to the pulse processor 252 whenever that detector is to be used.

Switch 264 is normally open, and will be closed when the shutter plate is off of its center position. In addition to being used as an input to the microprocessor, the output of microswitch 264 is also used to enable circuitry 270 which is included to permit microprocessor selection of one or the other detector when the shutter is in its center position (i.e. when both calibration targets are in position over the openings in the sensor head). This logic circuitry 270 consists essentially of a flip-flop constructed of two cross-coupled AND gates with inverted inputs (more commonly referred to as NOR gates) 272 and 274. The two inputs to this flip-flop are derived from the microprocessor via the device select lines, so that the flip-flop may be set into either of its two states by the microprocessor.

The outputs of this flip-flop are used to control the positions of swtiches 254 and 256 when the switch 264 indicates that the shutter plate is at its center position. When the shutter plate is not at its center position, the control of the analog switches 254 and 256 by the flip-flop 270 is disabled by NOR gates 276 and 278. Thus, the outputs of NOR gates 276 and 278 will reflect the input provided by flip-flop 270 only when the switch 264 is in the illustrated position, i.e., when the shutter plate is at its center position. Two diodes 280 and 282 are used to isolate the outputs of switches 262 and 266 from the outputs of OR gates 276 and 278. If these diodes were not present, then the outputs of gates 276 and 278 would be directly connected to the +5 supply whenever one of switches 262 or 266 were closed.

As stated previously, a number of different sensor heads may be alternatively connected with the multichannel analyzer, each having different types of detectors and radiation sources. In order to automatically indicate to the multichannel analyzer which sensor head is being employed, a detector ID circuit 290 is utilized. This detector ID circuit 290 provides a three bit binary code identifying the detector. Since a three bit code is used, eight different sensor heads may be interchangeably employed with the multichannel analyzer. Of course, if a larger number of sensor heads were available, then the ID circuit 290 would be expanded to provide a larger number of bits.

Figure 7B illustrates the contents of the calibration control block 218 of Figure 6 in greater detail. This calibration control circuit includes two latches 292 and 294, each of which is connected to the data bus. Two device select lines are used to actuate the latches 292 and 294 so as to clock appropriate data words into these latches. The output of latch 292 is used to provide a digital word to a programmable high voltage supply circuit 296. This high voltage supply provides a controlled voltage to the high voltage line 236 in the sensor head 208. By controlling the digital word contained within latch 292, the voltage applied across the detectors, and thus their gain, can be controlled. The output of latch 294 is directly supplied to a digital-to-analog (D/A) converter 298, where it is converted into a corresponding analog signal. This analog signal is used to provide the off-set for amplifiers 246 and 248 within the sensor head circuitry of Figure 7A.

It is, of course, highly unlikely that both of detectors 232 and 234 will require the same high voltage signal in order to properly adjust the gain of the multichannel analyzer for that detector. It is similarly unlikely that the offset required by amplifiers 246 and 248 will be

 **0 014 580**

identical. It is therefore necessary to provide different digital words to the programmable high voltage supply 296 and the D/A converter 298, dependent upon which of the two detectors is to be utilized. As will be brought more fully hereinafter, the microprocessor provides the necessary data and device select signals to latch the appropriate digital words into latches 292 and 294 whenever the switches 262, 264 and 226 of the sensor head indicate that one or the other of the detectors 232 and 234 is to be enabled.

Figure 8 illustrates the manner in which the sensor head of Figure 7A and the calibration control circuit of Figure 7B are interconnected, as well as showing the manner in which the various signals are supplied to these two circuits from the remainder of the circuitry of Figure 6. Input port B comprises two eight bit wide input ports B.1 and B.2. Input port B.1 is responsive to the various signals provided by the sensor head indicative of the detector condition, and to the three bit signal provided by the detector ID circuit 290. Input port B.2, on the other hand, responds to the eight bits of data provided by A/D converter 258, indicative of the amplitude (i.e. energy) of a particular pulse detected by one of detectors 232 and 234.

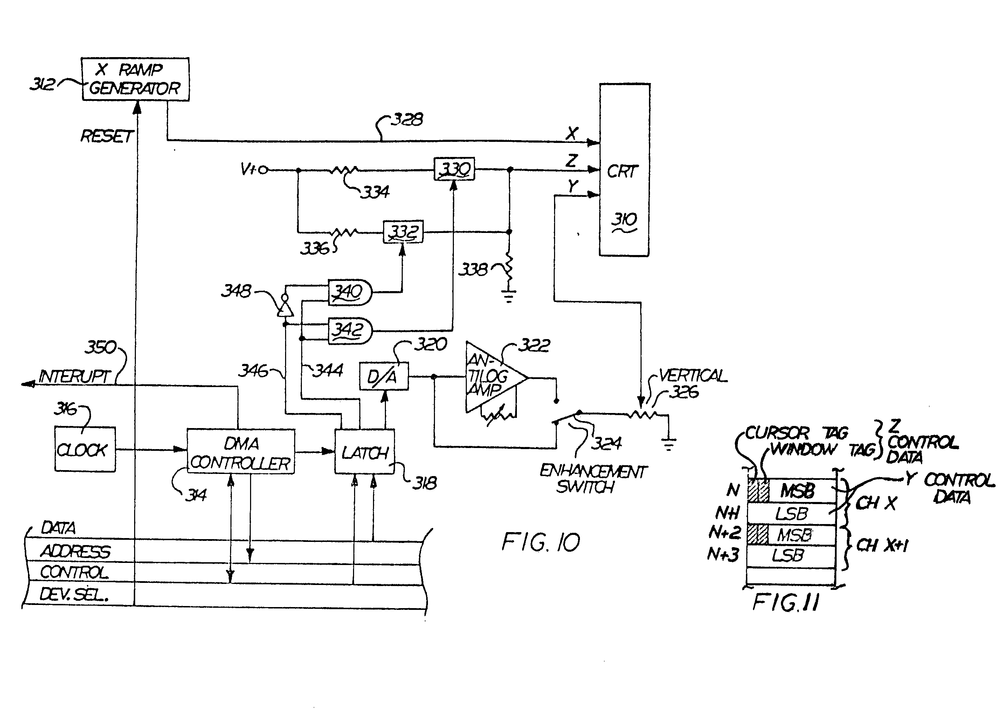

Figure 9 illustrates in greater detail the analyzer controls, and their manner of interconnection with the microprocessor control system of Figure 6. For convenience of description, the switches illustrated in Figure 9 have been given the same reference number as the corresponding switches of Figure 2. Each of switches 40, 42, 44, 46, 48, 52, and 54 is an SPST switch interconnected between a +5V supply, and a corresponding pull-down resistor 300. As before, these pull-down resistors are included to pull the output of the switch down to a ground voltage level when the switch is in an open state. Preferably, switch 52 (which controls the SMOOTH function) and switch 48 (which controls the WINDOW function) will be latching switches which will latch into the open or closed position upon being depressed by the operator. Each of the remaining switches 40, 42, 44, 46, and 54 will, however, instead be momentary contact switches which will return to an open condition after being released by the operator.

The CONCENTRATION switch 58, unlike the other switches thus far described, is a latching DPDT switch having two poles 302 and 304. The normally open contact of pole 304 will be connected between the +5V supply and a dropping resistor 306. An LED 62 including an internal dropping resistor is connected across the dropping resistor 306 so as to provide a visual indication of the status of the switch, and thus of the nature of the read-out provided along the LCD display 56 of Figure 2. The other pole 302 of switch 58 is also connected between a +5V supply and a second LED 60. Switch 302 is normally closed, whereas switch 304 will be normally open. Thus, at any given time +5V will be supplied to one and only one of LEDs 60 and 62. These LED's therefore provide a visual indication of the state of the switch, and thus of the nature of the read out provided by the LCD displays 56 of Figure 2.

The outputs of these eight switches are provided to one section of input port A, designated port A.1 in Figure 9. Input port A also includes four other sections, to which are directed signals suplied by various other controls of the multichannel analyzer. Thus, the counts/second switch 24 provides an eight bit word to input port A.2. The switch 24 is a single-pole eight-throw switch, and will provide a low voltage level to each of the eight outputs except one, which will be at a +5V level. By rotating the switch 24, the one of the eight outputs which is at a high logic level may be shifted in one direction or the other. The thumb wheel switches 36 and 38 each provide eight bit words to the data bus via corresponding sections of input port A, sections A.3 and A.4.

The cursor potentiometer 28 and the window potentiometer 49 both provide variable analog signals to analog-to-digital (A/D) converter 308. A/D converter 308 converts one of these analog signals into a corresponding eight bit digital word and provides this digital word to a fifth section of the input port, designated A.5 in Figure 9. The device select lines are used to select which analog signal is to be converted to digital.

The various sections of input port A thus serve to interface each of the controls provided on the face of the multichannel analyzer with the data bus, except for the enhancement switch 50 which operates directly in conjunction with the display DMA circuit 228, shown more particularly in Figure 10.

Figure 10 illustrates in greater detail the circuitry utilized to display the spectrums upon the face of the video display screen 12, of Figure 2. This display surface is preferably the face of a cathode ray tube (CRT) 310. CRT 310 is responsive to an X input and a Y input for positioning of an electron beam on the face thereof in a horizontal and vertical direction respectively. The CRT 310 is further responsive to a Z input for controlling the intensity of the electron beam as it scans across the face of the tube.

The scanning of the electron beam in the X direction across the face of the CRT is accomplished by providing the X input of CRT 310 with a ramp waveform suplied by X ramp generator 312. Ramp generator 312 provides at its output a voltage which increases linearly with time, and which is reset periodically by the microprocessor through use of one of the device select lines.

The displays provided by the CRT are generated by modulating the signal provided to the Y input thereof as the electron beam scans across the face of the tube in the X direction.

This modulation is accomplished by sequentially reading out memory locations within a specific section of memory 202. The data which is to be displayed on the surface of display screen 12 will be stored in memory in the format shown in Figure 11. Each energy channel will be assigned two 8-bit bytes within the memory. The first 8 bit byte will comprise the eight least significant bits of the number of counts which has been recorded for that channel. The second byte includes the six most significant bits of this count number, with the remaining two bits identifying the desired intensity of the display.

Although the microprocessor could be used to read the data out of memory for display purposes, to do so would monopolize too great a portion of the microprocessor's time. A direct memory access (DMA) controller 314 is therefore provided to instead perform thus function. At the beginning of each scan of the screen 12 by CRT 310 (i.e. immediately following the resetting of X ramp generator 312 by the microprocessor), the microprocessor will load the DMA controller 314 with a selected initial memory address. DMA controller 314 will thereafter respond to clock pulses provided by a clock circuit 316 to sequentially read out the memory, from that initial address. The clocking rate of clocking circuit 316 is selected so the 128 clock cycles will transpire during the period of time in which the electron beam is scanning across the face of the CRT 310. DMA controller 314 treats the clock pulses generated by clock circuit 316 as DMA requests by the CRT. Consequently, with each clock pulse, the DMA controller 314 will provide a "hold" request to the microprocessor which will cause it to relinquish control of the data and address buses. After accomplishing this, the microprocessor will acknowledge the entry of a HOLD state to the DMA controller, indicating to the DMA controller that it may now directly access the memory through use of the data and addresses buses. DMA controller 314 will then sequentially provide two memory addresses along the address line, and will latch the data provided along the data bus by the memory in response to these addresses into the latch 318.

Fourteen of the 16 bits thus latched into latch 318, containing the number of counts for the energy channel then being displayed, are provided to a digital-to-analog converter 320, which converts them to a corresponding analog signal. This analog signal is provided to an amplifier 322 which has an antilogarithmic transfer characteristic. The output of the D/A converter 320 is also directly supplied to ENHANCEMENT switch 324, described earlier with respect to Figure 1. When switch 324 is in one position, the output of D/A converter 320 is directly suplied to a vertical scale potentiometer 326. When the ENHANCEMENT switch is in the enhancement position, on the other hand, the output of the antilog amplifier 322 is instead supplied to the vertical scale potentiometer 326. When in this enhancement position, the vertical displacement along the displayed spectrum will be enhanced, due to the nonlinear transfer characteristics of antilog amplifier 322.

The vertical scale potentiometer 326 corresponds to potentiometer 68, described previously with respect to Figure 1. The wiper arm of this potentiometer is connected to the Y input of the CRT 310. The gain of the spectrum 22 on the face of the video display screen 12 may be manually adjusted by appropriately changing the setting of the vertical scale potentiometer.

The two bits stored in latch 318 which correspond to the intensity control information are provided to an intensity control circuit, generally indicated at 328. The intensity control bits provided on output lines 344 and 346 are each used to implement a corresponding function. More specifically, the bit corresponding to the output line 344 is used to implement the "window" function, and will be referred to as the "window tag" hereinafter. The bit corresponding to output line 346 on the other hand, is used to define the cursors, and will thus be referred to hereinafter as the "cursor tag".

The intensity of the electron beam on the face of the CRT will depend upon the impedance level of two analog switches 330 and 332 which respectively connect resistors 334 and 336 to a third resistor 338. When analog switch 330 is in a low impedance state, the voltage at the Z input into CRT 310 will depend upon the relative resistance values of resistors 334 and 338. When analog switch 330 is in a high impedance state, and analog switch 332 is instead in a low impedance state, the voltage level at the Z input to CRT 310 will instead depend upon the relative resistance values of resistors 336 and 338. When neither of analog switches 330 and 332 is in a low impedance state, however, the voltage level at the Z input to CRT 310 will be essentially at a ground level, and the CRT beam will be blanked.

The impedance levels of analog switches 332 and 330 are controlled by respective AND gates 340 and 342. When the output 344 of latch 318 is at a low impedance level, then both AND gates 340 and 342 will be disabled, resulting in both analog switches 330 and 332 being in high impedance states. Thus, whenever the voltage level at the output 344 of latch 318 is in a high logic level, the CRT 310 will be blanked. When the output 344 of latch 318 is at a high logic level, however, the output of AND gates 340 and 342 will instead depend upon the logic level at the second intensity control output 346 of latch 318. When this output is in a high logic level, then AND gate 342 and analog switch 330 will be enabled, resulting in a selected beam intensity on the face of the CRT 310. During this period, the output of AND gate 340 will be disabled since the output 346 of latch 318 is supplied thereto through an inverter 348.

Similarly, when the output 346 of latch 318 is at a low logic level, AND gate 342 and analog switch 330 will be disabled, whereas AND gate 340 and analog switch 332 will be enabled. In this case, the intensity of the electron beam on the face of the CRT 310 will be at a different selected level. This permits display of a heightened-intensity cursor, as described previously.

As the electron beam scans across the face of the CRT 310, the clock 316 will trigger the DMA controller 314 to latch new intensity and Y deflection information into the latch 318 for each of the 128 channels which are to be displayed. After the conclusion of the display of all 128 channels, the DMA controller 314 will raise an interrupt flag along an interrupt line 350, connected to the interrupt input of the microprocessor 200, shown in Figure 5. This interrupt will cause the microprocessor 200 to interrupt whatever procedure it was implementing at that time, and to service the display DMA to prepare for the next scan.

In summary, then, a portable element analyses unit has been described which provides qualitative and quantitative analysis of mineral or other material specimens of unknown compositions. This portable unit provides storage of reference spectrums, as well as storage of sample spectrums which have been obtained by the operator. The element analysis unit provides a visual display of the various spectrums, each of which represents the energy distribution of fluorescent particles emitted by a mineral sample under study.

A visual cursor is provided by heightening the intensity of one energy channel of the displayed spectrum. This cursor may be moved by the operator to occupy any one of the energy channels along the spectrum. The unit provides a read-out of the symbol of the element having its principal peak at the position identified by the cursor. Channels corresponding to any secondary peaks in the spectrum of that element are indicated to the operator by heightening the intensity of the spectrum in those channels as well. This permits the operator to readily ascertain whether or not that element is present in the mineral sample being treated.

The element analysis unit also provides a read-out of the concentration of the particular element within the sample being studied. Enhancement of the displayed spectrum may be provided so as to emphasize peaks thereon, with a smoothing function being provided so as to reduce the effect of statistical outliers along the spectrum. Furthermore, a normalization function allows the operator to normalize the amplitude of the spectrum in accordance with the number of counts in the backscatter peak channel.

In the embodiment which has been described, it has been presumed that sufficient storage space exists within the memory in the element analysis unit to permit storage of a very large number of look-up tables. The amount of storage space required for this purpose may be reduced by providing look-up tables only for selected elements, or only for selected mineral compositions. Another technique for reducing the storage requirements of the analysis unit is to provide an appropriate amount of read-only memory within each of the sensor heads, so as to provide look-up tables specifically associated with the detectors included in that sensor head. In this fashion, interchanging of the sensor head would automatically entail changing of the look-up tables in accordance with the particular detectors employed in the new sensor head.

Although the invention has been described with respect to a preferred embodiment, it is apparent that many rearrangements and alterations of the parts may be made without departing from the spirit and scope of the present invention, as defined in the appended claims.

## Claims

1. An element analysis unit comprising:

sensor means (4) including radiation means (78 or 80) for irradiating a material (6) to be analysed, and detector means (86 or 90) for detecting radiation returned by the irradiated material (6) and providing signals representative of said returned radiation; and

processing means (2) interconnected with said sensor means (4) for processing said representative signals;

characterized in that indicating means (290) is provided in said sensor means (4) for providing an indication of the type of said radiation means (78 or 80) and said detector means (86 or 90), and in that said processing means (2) is responsive to said indication in such a way that said processing means (2) will be automatically adapted for operation with the associated type of radiation means and detector means when the sensor means (4) and processing means (2) have been interconnected.

2. An element analysis unit according to claim 1, including a plurality of said sensor means (4) each having respective different radiation means and detector means and each having a said indicating means (290).

3. An element analysis unit according to claim 1 or claim 2, wherein said sensor means (4) comprises a plurality of alternatively selectable radiation means (78 or 80) and detector means (86 or 90), and wherein said indicating means (290) is operative to provide an indication to said processing means (2) of which of said plurality of alternatively selectable radiation means (78 or 80) and detector means (86 or 90) are presently being selected.

4. An element analysis unit according to claim 1, claim 2 or claim 3, wherein said processing means (2) comprises spectrum display means (12) for displaying the energy spectrum of said radiation returned by the irradiated material (6), the spectrum display means (12) being responsive to said signals from said detector means (86 or 90), and identifying means for identifying features of said energy spectrum, the identifying means being responsive to said indicating means (290) and to said signals from said detector means (86 or 90).

5. An element analysis unit according to claim 4, wherein said processing means (2) comprises a cursor (27) on said spectrum display means (12) and a manually operated cursor control (28) enabling manual control of the position of the cursor on a display spectrum, and a display (32) for displaying an indication of an atomic element represented by the portion of spectrum which corresponds to the position of the cursor, wherein said identifying means is responsive to the cursor control and is operative to provide the indication of the atomic element.

6. An element analysis unit according to any one of the preceding claims, wherein a shutter means (100) is provided in said sensor means (4) for selectively blocking an opening (84 or 92) in said sensor means (4), said opening (84 or 92) being positioned such that the radiation from the radiation means (78 or 80) which irradiates the irradiated material (6) and the radiation from the irradiated material (6) which returns to the detector means (86 or 90) must pass through said opening (84 or 92), and wherein, when said shutter means (100) is blocking said opening (84 or 92), a surface (114 or 116) of said shutter means (100) is irradiated by said radiation means (78 or 80) and said detector means (86 or 90) detects radiation returned from said surface (114 or 116), said surface (114 or 116) being formed of a material having a fluorescent radiation characteristic selected so that the signals provided by said detector means (86 or 90) should have a known distribution of values, whereby said processing means (2) may be calibrated in accordance with said known distribution of values and the actual distribution of values of the signal provided by the detector means (86 or 90).

### Revendications

1. Un appareil d'analyse élémentaire comprenant:

une sonde (4) comprenant des moyens d'émission de rayonnement (78 ou 80) pour irradier une matière (6) à analyser, et des moyens détecteurs (86 ou 90) pour détecter le rayonnement renvoyé par la matière irradiée (6) et pour produire des signaux représentatifs de ce rayonnement renvoyé; et

des moyens de traitement (2) interconnectés avec la sonde (4) pour traiter les signaux représentatifs;

caractérisé en ce que des moyens d'indication (290) sont incorporés dans la sonde (4) pour fournir une indication du type des moyens d'émission de rayonnement (78 ou 80) et des moyens détecteurs (86 ou 90), et en ce que les moyens de traitement (2) réagissent à cette indication d'une manière telle que ces moyens de traitement (2) s'adaptent automatiquement au fonctionnement avec le type associé de moyens d'émission de rayonnement et de moyens détecteurs, lorsque la sonde (4) et les moyens de traitement (2) ont été interconnectés.

2. Un appareil d'analyse élémentaire selon la revendication 1, comprenant un ensemble de sondes (4), avec des moyens d'émission de rayonnement et des moyens détecteurs différents respectifs dans chaque sonde et des moyens d'indication (290) dans chaque sonde.

3. Appareil d'analyse élémentaire selon la revendication 1 ou la revendication 2, dans lequel la sonde (4) comprend un ensemble de moyens d'émission de rayonnement (78 ou 80) et de moyens détecteurs (86 ou 90) qu'on peut sélectionner alternativement, et dans lequel les moyens d'indication (290) indiquent aux moyens de traitement (2) quels sont les moyens d'émission de rayonnement (80 ou 82) et les moyens détecteurs (86 ou 90) qui sont sélectionnés au moment présent, parmi l'ensemble de moyens d'émission de rayonnement et de moyens de détection qu'on peut sélectionner alternativement.

4. Appareil d'analyse élémentaire selon la revendication 1, la revendication 2 ou la revendication 3, dans lequel les moyens de traitement (2) comprennent des moyens de présentation de spectre (12) destinés à présenter le spectre d'énergie du rayonnement renvoyé par la matière irradiée (6), des moyens de présentation de spectre (12) réagissant auxdits signaux provenant des moyens détecteurs (86 ou 90), et des moyens d'identification destinés à identifier des caractéristiques du spectre d'énergie, les moyens d'identification réagissant aux moyens d'indication (290) et auxdits signaux provenant des moyens détecteurs (86 ou 90).

5. Appareil d'analyse élémentaire selon la revendication 4, caractérisé en ce que les moyens de traitement (2) comprennent un curseur (27) placé sur les moyens de présentation de spectre (12) et une commande de curseur (28) actionnée manuellement qui permet de commander manuellement la position du curseur sur un spectre présenté, et un afficheur (32) destiné à afficher une indication d'un élément atomique représenté par la partie du spectre qui correspond à la position du curseur, et dans lequel les moyens d'identification réagissent à la commande du curseur et fournissent l'indication de l'élément atomique.

6. Appareil d'analyse élémentaire selon l'une quelconque des revendications précédentes, dans lequel un obturateur (100) est incorporé dans la sonde (4) de façon à fermer sélectivement une ouverture (84 ou 92) dans la sonde (4), cette ouverture (84 ou 92) étant placée de façon que le rayonnement provenant des moyens d'émission de rayonnement (78 ou 80) qui irradie la matière irradiée (6) et le rayonnement provenant de la matière irradiée (6) qui retourne vers les moyens détecteurs (86 ou 90) doivent traverser cette ouverture (84 ou 92), et dans lequel, lorsque l'obturateur (100) ferme l'ouverture (84 ou 92), une surface (114 ou 116) de l'obturateur (100) est irradiée par les moyens d'émission de rayonnement (78 ou 80) et les moyens détecteurs (86 ou 90) détectent le rayonnement renvoyé à partir de ladite surface (114 ou 116), cette surface (114 ou 116) étant formée par une matière ayant une caractéristique de rayonnement de fluorescence qui est choisie de façon que les signaux produits par les moyens détecteurs (86 ou 90) aient une distribution de valeurs connue, grâce à quoi les moyens de traitement (2) peuvent être étalonnés conformément à cette distribution de valeurs connue et à la distribution de valeurs réelle du signal produit par les moyens détecteurs (86 ou 90).

**Patentansprüche**

1. Element-Analyse-Einheit umfassend Fühlermittel (4) einschließlich Strahlungsmittel (78 oder 80) zur Bestrahlung eines zy analysierenden Materials (6) und Detektormittel (86 oder 90) zur Feststellung vom Bestrahlten Material (6) zurückgesandter Strahlung, welche für diese zurückgesandte Strahlung bezeichnende Signale liefern; sowie Verarbeitungsmittel (2), welche mit besagten Fühlermitteln (4) zur Auswertung des besagten bezeichnenden Signale verbunden sind, dadurch gekennzeichnet, daß Anzeigemittel (290) in den Fühlermitteln (4) zwecks Lieferung einer Anzeige des Typs der Strahlungsmittel (78 oder 80) und der Detektormittel (86 oder 90) vorgesehen sind und daß die Verarbeitungsmittel (2) auf diese Anzeige derart reagieren, daß die Verarbeitungsmittel (2) automatisch an den Betrieb mit dem zugehörigen Typ von Strahlungsmitteln angepaßt werden, sobald Fühlermittel (4) und Verarbeitungseinrichtung (2) verbunden worden sind.

2. Element-Analyse-Einheit nach Anspruch 1, mit einer Mehrzahl der genannten Fühlermittel (4), von denen jedes verschiedene Strahlungs- und Detektormittel und eines der genannten Anzeigemittel (290) aufweist.

3. Element-Analyse-Einheit nach Anspruch 1 oder 2, wobei das genannte Fühlermittel (4) eine Mehrzahl von alternativ wählbaren Strahlungsmitteln (78 oder 80) und Detektormitteln (86 oder 90) umfaßt, und wobei das Anzeigemittel (290) zur Lieferung einer Anzeige darüber an die Verarbeitungsmittel (2) geeignet ist, welches der alternativ wählbaren Strahlungsmittel (80 oder 82) und Detektormittel (86 oder 90) gerade gewählt ist.

4. Element-Analyse-Einheit nach Anspruch 1, 2 oder 3, wobei das Verarbeitungsmittel (2) Strahlungsanzeigemittel (12) zur Anzeige des Energiespektrums der vom bestrahlten Material (6) zurückgesandten Strahlung umfaßt und diese Spektrumsanzeigemittel (12) auf die genannten Signale von den Detektormitteln (86 oder 90) ansprechen, sowie Identifizierungsmittel zur Identifizierung von Merkmalen dieses Energiespektrums, welche auf die Anzeigemittel (290) und die genannten Signale von den Detektormitteln (86 oder 90) ansprechen.

5. Element-Analyse-Einheit nach Anspruch 4, wobei die Verbindungsmittel (2) einen Läufer (27) auf den Spektrumsanzeigemitteln (12) umfassen und eine handbetätigte Läuferkontrolle (28), welche die manuelle Kontrolle der Position des Läufers auf einem dargestellten Spektrum erlaubt, und eine Anzeige (32) zur Darstellung einer Bezeichnung eines chemischen Elementes, dem der der Stellung des Läufers entsprechende Bereich des Spektrums zugeordnet ist, und wobei das genannte Identifizierungsmittel auf die Läuferkontrolle (28) anspricht und zur Anzeige des chemischen Elementes geeignet ist.

6. Element-Analyse-Einheit nach einem der vorhergehenden Ansprüche, wobei im Fühlermittel (4) ein Verschlußmittel (100) vorgesehen ist zum wahlweisen Verschluß einer Öffnung (84 oder 92) im Fühlermittel (4), und die Öffnung (84 oder 92) so angeordnet ist, daß die Strahlung vom Strahlungsmittel (78 oder 80), welche das bestrahlte Material (6) bestrahlt und die Strahlung vom bestrahlten Material (6), die zum Detektormittel (86 oder 90) zurückkehrt, durch diese Öffnung (84 oder 92) gehen muß, und wobei wenn das Verschlußmittel (100) die Öffnung (84 oder 92) verschließt, eine Oberfläche (114 oder 116) des Verschlußmittels (100) vom Strahlungsmittel (78 oder 80) bestrahlt wird und das Detektormittel (86 oder 90) von dieser Oberfläche (114 oder 116) zurückkommende Strahlung feststellt, und wobei diese Oberfläche (114 oder 116) aus einem Material besteht, das eine solche Fluoreszenzstrahlungscharakteristik hat, daß die vom Detektormittel (86 oder 90) gelieferten Signale eine bekannte Werteverteilung haben sollten, sodaß die Verarbeitungsmittel (2) in Übereinstimmung mit dieser bekannten Werteverteilung und der tatsächlichen Werteverteilung des von den Detektormitteln (86 oder 90) gelieferten Signals kalibrierbar sind.

FIG.1

FIG.2

FIG. 4

FIG. 3

0014580

FIG.5

FIG. 6

**0 014 580**

FIG. 7A
SENSOR HEAD

FIG. 7B

TO DATA BUS

DETECTOR CONDITION FLAGS

**0 014 580**

FIG. 9
ANALYZER CONTROLS

FIG. 8

7

FIG. 10

FIG. 11